# EUROPEAN PATENT SPECIFICATION

(11) **EP 2 566 209 B1**
(45) Date of publication and mention of the grant of the patent: **26.12.2018**
(21) Application number: 12182405.6
(22) Date of filing: 30.08.2012
(51) Int. Cl.: H04W 12/08, H04W 64/00, H04W 48/16, G06F 3/12, G06F 21/60, H04L 29/06, G06F 21/44, G06F 21/84, H04W 8/00, H04W 84/18, H04W 76/10

(54) **Image forming apparatus supporting peer-to-peer connection and method of managing security based on signal intensity thereof**
Bilderzeugungsvorrichtung mit P2P-Anschlussunterstützung und Verfahren zum Verwalten der Signalintensität auf Sicherheitsgrundlage davon
Appareil de formation d'image supportant une connexion poste à poste et procédé de gestion de sécurité basé sur l'intensité de signal de celui-ci

(30) Priority: 02.09.2011 KR 20110089253
(43) Date of publication of application: 06.03.2013
(73) Proprietor: HP Printing Korea Co., Ltd., Gyeonggi-do 16677 (KR)
(72) Inventor: Park, Sung-joon, Gyeonggi-do (KR); Kim, Jin-hyung, Gyeonggi-do (KR)
(74) Representative: Walaski, Jan Filip

(56) References cited:
- EP-A1- 2 410 512
- WO-A2-2008/144520
- US-B1- 7 257 374

## Description

### FIELD OF INVENTION

The present invention relates to an image forming apparatus supporting peer to peer (P2P) connection, and more particularly, to a method of managing security based on a signal intensity of an image forming apparatus that supports P2P connection.

### BACKGROUND

Recently, peer to peer (P2P) communication technology, by which wireless devices may be directly connected to each other without an additional wireless connecting apparatus, have been generalized and widely used. For example, BLUETOOTH technology makes the P2P communication possible. Although there are limitations in terms of transmission speed and transmission range of BLUETOOTH, new versions of BLUETOOTH are being developed to compensate for the limitations.

In addition, WI-FI, which is a wireless local area network (WLAN) standard based on IEEE 802.11 regulated by the WI-FI ALLIANCE is basically a technology using ultrahigh speed Internet by accessing access points (APs) connected to an infrastructured network; however, the WI-FI may serve the P2P communication by using an ad-hoc function. However, when the ad-hoc function is used, security is weakened, a transmission speed is lowered, and a setting method is not easily performed.

Therefore, the WI-FI alliance has suggested a WI-FI DIRECT technology that makes the P2P communication possible. The WI-FI DIRECT allows P2P connection between wireless devices without using the AP, supports a transmission speed of a maximum of 250 Mbps, and performs security settings by using WI-FI protected access 2 (WPA2), in order to address problems of the ad-hoc function. In addition, the WI-FI DIRECT supports a transmission range of a maximum of 200m, and thus, is considered as a substitute for the P2P communication.

As described above, with the appearance of the WI-FI DIRECT, it is considered that utilization of P2P communication is increased. In addition, the P2P communication technology may be also applied to image forming apparatuses such as printers, scanners, facsimiles, and multi-function printers. Therefore, technologies for user authentication, controlling connections, controlling rights, and managing security are necessary for safely and conveniently using image forming apparatuses supporting the P2P connection.

US 7,257,374 B1 discloses a security system for wireless devices such as mobile phones.

Additional aspects and/or advantages will be set forth in part in the description which follows and, in part, will be apparent from the description, or may be learned by practice of the invention.

The present invention provides a method of managing security of an image forming apparatus that supports a peer-to-peer (P2P) connection based on a signal intensity after measuring intensity of signals transmitted from wireless devices that try to connect to the image forming apparatus or requests operations to the image forming apparatus.

According to an aspect of the present invention, there is provided an image forming apparatus according to claim 1 and a method of managing security of an image forming apparatus according to claim 7.

According to an aspect of the present invention, there is provided a method of managing security of an image forming apparatus that supports a peer-to-peer (P2P) connection based on a signal intensity, the method including: measuring an intensity of a signal transmitted from an external wireless device by the image forming apparatus; and controlling an access of the wireless device by the image forming apparatus based on the measured signal intensity.

The measuring of the signal intensity may include: receiving a connection request from the external wireless device when the image forming apparatus operates as the AP; and measuring the signal intensity of the connection request.

The controlling of the access may include: comparing the measured signal intensity with a reference signal intensity that is set in advance; and denying the access of the wireless device when the measured signal intensity is less than the reference signal intensity, and allowing the access of the wireless device when the measured signal intensity is equal to or greater than the reference signal intensity.

The measuring of the signal intensity may include: searching for wireless devices that are currently connected to the image forming apparatus when the image forming apparatus operates as the AP; and measuring intensities of signals transmitted from the searched wireless devices.

The controlling of the access may include: comparing the measured signal intensity with a reference signal intensity that is set in advance; and terminating the connection to the wireless device having the signal intensity that is less than the reference signal intensity.

The controlling of the access may include: checking the number of searched wireless devices; and when the number of searched wireless devices exceeds a predetermined number that is set in advance, terminating connections of the wireless devices after remaining the predetermined number of wireless devices in an order of the measured signal intensities.

The measuring of the signal intensity may include: receiving a job request from the wireless device that is currently connected to the image forming apparatus; and measuring an intensity of a signal transmitted from the wireless device that transmits the job request.

The controlling of the access may include: comparing the measured signal intensity with the reference signal intensity that is set in advance; and denying execution of the job requested by the wireless device when the measured signal intensity is less than the reference signal intensity, and executing the requested job when the measured signal intensity is equal to or greater than the reference signal intensity.

According to another aspect, there is provided an image forming apparatus supporting a peer-to-peer (P2P) connection, the image forming apparatus including: a communication interface unit connecting to an external wireless device in the P2P connection; a connection management unit managing the connection to the external wireless device; and a security management unit measuring an intensity of a signal transmitted from the external wireless device, and controlling an access of the wireless device based on the measured signal intensity.

The security management unit may include: a signal intensity measurement unit for measuring the intensity of the signal from the wireless device; a reference signal intensity setting unit setting a reference signal intensity; and a signal intensity comparing unit comparing the signal intensity measured by the signal intensity measurement unit with the reference signal intensity.

The connection management unit may allow the connection to the wireless device if an intensity of a connection request signal transmitted from an external wireless device is equal to or greater than the reference signal intensity and may deny the connection if the intensity of the connection request signal is less than the reference signal intensity when the image forming apparatus operates as the AP,.

The connection management unit may terminate connections to the wireless devices having signal intensities less than the reference signal intensity among wireless devices that are currently connected to the image forming apparatus.

When the number of searched wireless devices exceeds a predetermined number that is set in advance and the image forming apparatus operates as the AP, the connection management unit may terminate connections of the wireless devices after remaining the predetermined number of wireless devices in an order of the measured signal intensities.

The image forming apparatus may further include: a job request receipt unit to receive a job request from the wireless device; and an operation execution unit performing the requested job. The security management unit may include: a signal intensity measurement unit to measure the intensity of the signal from the wireless device that transmits the job request; a reference signal intensity setting unit setting a reference signal intensity; and a signal intensity comparing unit comparing the signal intensity measured by the signal intensity measurement unit with the reference signal intensity.

The job request receipt unit may execute the requested job when the measured signal intensity is equal to or greater than the reference signal intensity.

### BRIEF DESCRIPTION OF DRAWINGS

The above and other features and advantages of the present invention will become more apparent by describing in detail exemplary embodiments thereof with reference to the attached drawings in which:
FIG. 1 is a diagram showing devices supporting WI-FI DIRECT and legacy wireless local area network (WLAN) devices that are wirelessly connected to each other to form a wireless network;
FIG. 2 is a diagram showing processes of wirelessly connecting the devices supporting the WI-FI Direct to each other;
FIG. 3 is a diagram showing an example of displaying a list of WI-FI DIRECT devices that are found after a device discovery process performed by a device supporting the WI-FI DIRECT;
FIG. 4 is a diagram showing a group formation process in the processes of connecting the WI-FI DIRECT supporting devices to each other;
FIG. 5 is a diagram showing a display screen for executing WPS;
FIG. 6 is a diagram showing a list of devices, information of which is stored, supporting WI-FI DIRECT according to a profile storing function;
FIG. 7 is a diagram showing WI-FI DIRECT supporting devices that are simultaneously connected to each other;
FIG. 8 is a block diagram showing a hardware configuration of a multi-function printer supporting the WI-FI DIRECT according to an embodiment of the present invention;
FIG. 9 is a block diagram showing a software configuration of the multi-function printer supporting the WI-FI DIRECT of FIG. 8;
FIG. 10 is a block diagram showing a detailed structure of a multi-function printer supporting WI-FI DIRECT according to another embodiment of the present invention;
FIGS. 11 through 13 are flowcharts illustrating a method of managing security based on a signal intensity of the multi-function printer supporting the WI-FI DIRECT according to another embodiment of the present invention;
FIG. 14 is a block diagram of a multi-function printer supporting WI-FI DIRECT according to another embodiment of the present invention; and
FIG. 15 is a flowchart illustrating a method of managing security based on a signal intensity of the multi-function printer supporting the WI-FI DIRECT according to another embodiment of the present invention.

### DETAILED DESCRIPTION

Reference will now be made in detail to the embodiments, examples of which are illustrated in the accompanying drawings, wherein like reference numerals refer to the like elements throughout. The embodiments are described below to explain the present invention by referring to the figures.

The invention now will be described more fully hereinafter with reference to the accompanying drawings, in which illustrative embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those of ordinary skill in the art. Like numbers refer to like elements throughout.

Hereinafter, a multi-function printer (MFP) that supports WI-FI DIRECT will be described as an example of an image forming apparatus supporting a peer-to-peer (P2P) connection. However, the scope of the present invention to be protected is not limited thereto, but is defined by descriptions of claims.

Before describing embodiments of the present invention, a basic connections and operations of an MFP that supports the WI-FI DIRECT will be described with reference to accompanying drawings.

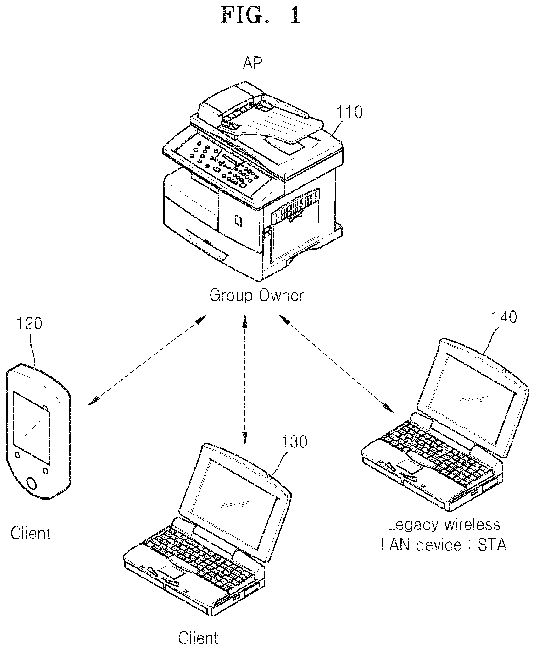

FIG. 1 is a diagram showing wireless local area network (WLAN) devices supporting WI-FI DIRECT and a legacy WLAN device connecting to each other to form a wireless network. Referring to FIG. 1, an MFP 110 supporting the WI-FI DIRECT is wirelessly connected to a smartphone 120 supporting the WI-FI DIRECT, a laptop computer 130 supporting the WI-FI DIRECT, and a legacy WLAN laptop computer 140. The legacy WLAN laptop computer 140 denotes a conventional laptop computer which adopts a WLAN technology and does not support the WI-FI DIRECT.

The WLAN device supporting the WI-FI DIRECT (hereinafter, referred to as "WI-FI DIRECT device") may perform a P2P connection without using an infrastructured network, unlike conventional devices supporting WI-FI. According to the conventional WI-FI technology, a WI-FI device is wirelessly connected to a router, that is, an access point (AP), connected to an infrastructured network that is configured in advance in order to form a wireless network. The WI-FI devices, which are wirelessly connected to the AP, function as stations. However, according to WI-FI DIRECT technology, one of the WI-FI DIRECT devices that are to form the wireless network operates as an AP, and the other WI-FI DIRECT devices are wirelessly connected to the WI-FI DIRECT device that operates as the AP to operate as stations. Therefore, the wireless network may be formed between the WI-FI DIRECT devices without the AP connected to the infrastructured network. In addition, when the wireless network is formed between the WI-FI DIRECT devices, the legacy WLAN devices such as the WI-FI devices may recognize the WI-FI DIRECT device operates as the AP as an AP and may be wirelessly connected to the WI-FI DIRECT device.

Referring to FIG. 1, the WI-FI DIRECT MFP 110, the WI-FI DIRECT smartphone 120, and the WI-FI DIRECT laptop computer 130 that are the WI-FI direct devices form a wireless network without an AP connected to the infrastructured network. As described above, the WI-FI DIRECT devices may be wirelessly connected to each other to form a P2P group without an AP connected to the infrastructured network. Here, the WI-FI DIRECT MFP 110 operates as the AP, and the device operating as the AP among the WI-FI DIRECT devices is referred to as a group owner (GO) of a P2P group. In addition, the WI-FI smartphone 120 and the WI-FI DIRECT laptop computer 130 are wirelessly connected to the GO, that is, the WI-FI DIRECT MFP 110, to operate as the stations, which are referred to as clients. On the other hand, the legacy WLAN laptop computer 140 that does not support the WI-FI DIRECT recognizes the GO, that is, the WI-FI DIRECT MFP 110, as the AP, and is wirelessly connected to the GO to be connected to the wireless network formed by the WI-FI DIRECT devices.

In FIG. 1, the WI-FI DIRECT MFP 110 operates as the GO; however, any one of the other WI-FI DIRECT devices, that is, the smartphone 120 and the laptop computer 130, may operate as the GO and the MFP 110 may operate as the client. Which of the WI-FI DIRECT devices to become the GO is determined through a negotiation process in WI-FI DIRECT connection processes, and this will be described in detail later. Meanwhile, the WI-FI DIRECT device may be the GO by itself before the connection without any negotiation, and the WI-FI DIRECT device in this case is referred to as an autonomous group owner (AGO). In addition, a wireless network formed based on the AGO is referred to as an autonomous P2P group. When the autonomous P2P group is formed, the legacy WLAN device may recognize the AGO as an AP connected to the infrastructured network and may be connected to the AGO.

Although FIG. 1 shows an example in which the WI-FI DIRECT devices form the P2P group without the AP connected to the infrastructured network, the WI-FI DIRECT devices may operate as the stations by connecting to the AP, if the AP is connected to the infrastructured network.

Hereinafter, wireless connecting processes between the WI-FI DIRECT devices and characteristics of the WI-FI DIRECT technology will be described with reference to the accompanying drawings. For convenience of description, an MFP supporting the WI-FI DIRECT (hereinafter, referred to as "WI-FI DIRECT MFP") will be described as an example; however, the scope of the present invention is not limited thereto, that is, embodiments of the present invention may be applied to printers, scanners, or facsimiles supporting the WI-FI DIRECT. In addition, the WI-FI DIRECT is used as an example of the P2P communication method; however, other kinds of P2P communication such as BLUETOOTH and ZIGBEE may be used within the applicable range of the present invention.

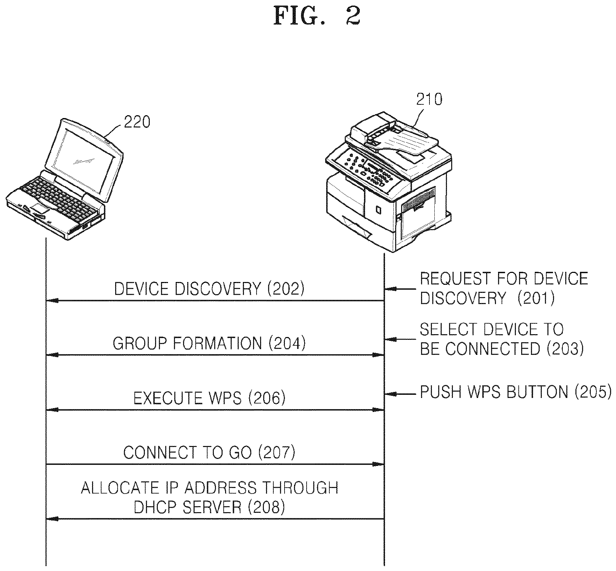

FIG. 2 is a diagram showing processes of wirelessly connecting WI-FI DIRECT devices to each other. In more detail, processes of WI-FI DIRECT connection between a WI-FI DIRECT MFP 210 and a WI-FI DIRECT laptop computer 220 are shown. The WI-FI DIRECT connecting processes may be divided as a device discovery process, a group formation process, and a secure connection process. Referring to FIG. 2, the WI-FI DIRECT MFP 210 receives a request for device discovery from a user, and searches for a WI-FI DIRECT device around it (202). The device discovery request may be input through a user interface of the MFP 210, for example, a user interface realized on a display unit such as a liquid crystal display (LCD) formed in the MFP 210. If it is determined as a result of searching that there is a WI-FI DIRECT device around the MFP 210, the MFP 210 shows the user the searched device through the display unit and receives a connection request 203 from the user. The connection request 203 may be also input through the display unit of the MFP 210 from the user, for example, the user may push buttons or a touch panel of the display unit. If there is a plurality of WI-FI DIRECT devices, the MFP 210 displays a list of the searched WI-FI DIRECT devices on the display unit so that the user may select one of the WI-FI DIRECT devices and request the connection to the selected WI-FI DIRECT device.

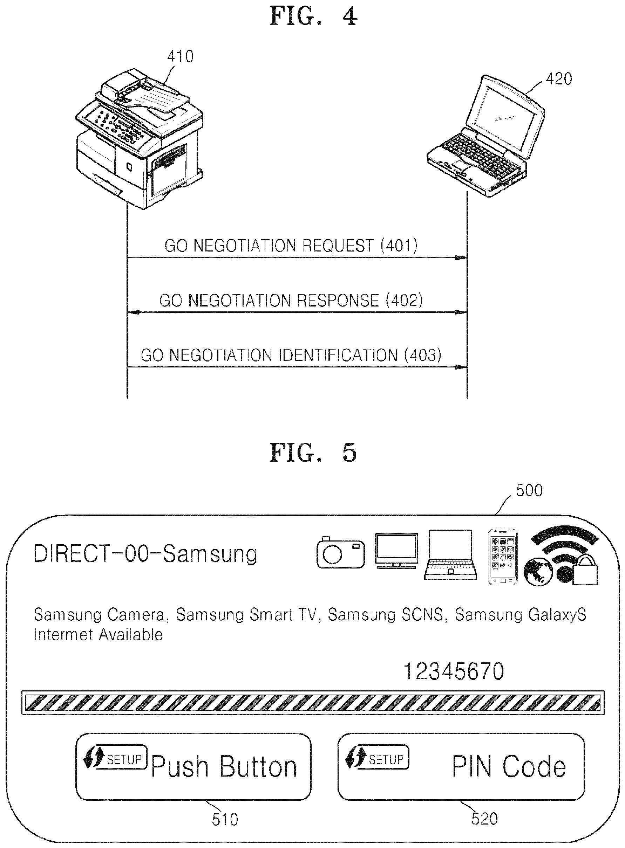

After receiving the connection request 203, a group formation is performed between the WI-FI DIRECT devices to be connected (204). The group formation process determines the WI-FI DIRECT devices to be connected to each other and determines the WI-FI DIRECT devices to be the GO or the clients in the group. The WI-FI DIRECT device to be the GO is determined through the negotiation between the WI-FI DIRECT devices, and the negotiation will be described in detail with reference to FIG. 4.

When the group is formed, the devices included in the group are to be securely connected to each other by using a WI-FI protected setup (WPS) technology. The WPS denotes a function of performing simple secure connection between the WI-FI supporting devices. The WPS may be classified as a personal identification number (PIN) type WPS and a push button configuration (PBC) type WPS. The PIN type WPS sets the secure connection by inputting a PIN code that is set in advance, and the PBC type WPS sets the secure connection by pushing a WPS button that is provided on the WI-FI DIRECT device.

Hereinafter, the PBC type WPS will be described as an example. The user pushes a WPS button provided on the MFP 210 to request the secure connection (205). In addition, within a predetermined period of time (in general, 120 seconds), the secure connection may be achieved by pushing a WPS button formed on the laptop computer 220, or a WPS button realized on an application program for WI-FI DIRECT connection in the laptop computer 220. The WPS button realized on the application program for the WI-FI DIRECT connection in the laptop computer 220 may be an object represented on a display unit of the laptop computer 220 by the application program for the WI-FI DIRECT connection. A detailed example of the WPS button is represented as reference numeral 510 in FIG. 5. The user clicks the WPS button represented on the display unit of the laptop computer 220 by using a mouse, for example, to request the secure connection. When the secure connection is requested by pushing the WPS button, the device that is determined to be the GO in the group formation process transmits security information to devices determined as the clients (206). According to the WI-FI DIRECT, the secure connection is executed after encrypting in a WI-FI protected access 2 (WPA2)-pre-shared key (PSK) method, and thus, the WI-FI DIRECT may have a higher security function than that of a conventional wired equivalent privacy (WEP) or WI-FI protected access (WAP) method.

When the WPS is executed, the WI-FI DIRECT device that is the client is connected to the WI-FI DIRECT device that is the GO (207). At this time, the WI-FI DIRECT device that is the GO automatically allocates an Internet protocol (IP) address to the WI-FI DIRECT device that is the client by using a dynamic host configuration protocol (DHCP) server (208), and then, the P2P connection between the WI-FI DIRECT devices is completed.

Basic processes for connecting the WI-FI DIRECT devices have been described so far, and detailed processes and characteristics of the WI-FI DIRECT technology will be described with reference to the accompanying drawings as follows.

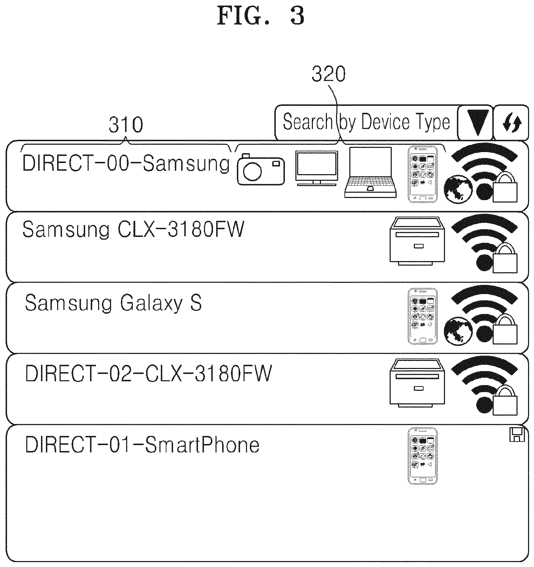

FIG. 3 is a diagram showing an example of displaying a list of the WI-FI DIRECT devices that are searched in the device discovery process in the WI-FI DIRECT device. When the device discovery process is performed by the WI-FI DIRECT device, device information such as a type of the device and a service set identifier (SSID) of the device is exchanged between the devices through a probe request and a probe response that are WLAN packets, and the WI-FI DIRECT device that performs the device discovery process displays the collected information. As shown in FIG. 3, the SSIDs and the types of the searched WI-FI DIRECT devices are represented as text or icons. The searched devices may be represented in the list; however, the devices may be filtered so that the devices of a desired type may be only displayed in the list. According to the WI-FI DIRECT technology, the WI-FI DIRECT devices are defined in category units. The WI-FI DIRECT devices may be classified as categories, for example, computers, input devices, printers, scanners, facsimiles, copying machines, and cameras, and each of the categories is divided into sub-categories. For example, the computer may be classified as personal computers (PCs), servers, laptop computers, and the like.

FIG. 4 is a diagram showing the group formation process in detail among the connecting processes between the WI-FI DIRECT devices. The group formation process is a process for determining the WI-FI DIRECT devices that are to form a network, and the WI-FI DIRECT devices to be the GO and the clients. For example, when the WI-FI DIRECT MFP 410 performs the device discovery and selects a laptop computer 420 among the discovered WI-FI DIRECT devices to be connected, the MFP 410 transmits a GO negotiation request to the laptop computer 420 (401). The laptop computer 420 receiving the GO negotiation request compares an intent value thereof with that of the MFP 410, and then, determines the MFP 410 as the GO when the intent value of the MFP 410 is greater than that of the laptop computer 420 and determines the laptop computer 420 as the GO when the intent value of the laptop computer 420 is greater. Here, the intent value is a value representing a degree of task intent in each device, and is determined by manufacturer policy and user settings. The intent value of the device, which is supplied power always, may be set to be relatively high. As described above, after determining the WI-FI DIRECT device to be the GO by comparing the intent values, the laptop computer 420 transmits the determination result to the MFP 410 as a response to the GO negotiation (402). The MFP 410 that receives the determination result transmits an acknowledgement to the laptop computer 420 (403) in order to verify the receipt of the negotiation, and then, the group formation process is finished. When the group formation is completed, the WI-FI DIRECT device that is the GO manages security information and SSIDs of the other WI-FI DIRECT devices included in the group.

When the group is formed, the WI-FI DIRECT devices included in the group are securely connected to each other through the WPS. FIG. 5 is a diagram showing a display screen 500 for executing the WPS. The screen of FIG. 5 may be displayed on a display unit of the WI-FI DIRECT MFP. Referring to FIG. 5, the user may select one of a WPS button 510 and a PIN code 520 for executing the WPS. When the WPS is executed through the WPS button 510, the WPS button 510 of the WI-FI DIRECT MFP is pushed and WPS buttons of other devices are pushed within a predetermined period of time, and then, security information is exchanged between the devices automatically and the secure connection is made. The WI-FI DIRECT device that is the GO provides security information to the WI-FI DIRECT devices that are the clients. In addition, the secure connection is performed after encrypting in the WPA2-PSK verification method, and thus, high security may be achieved.

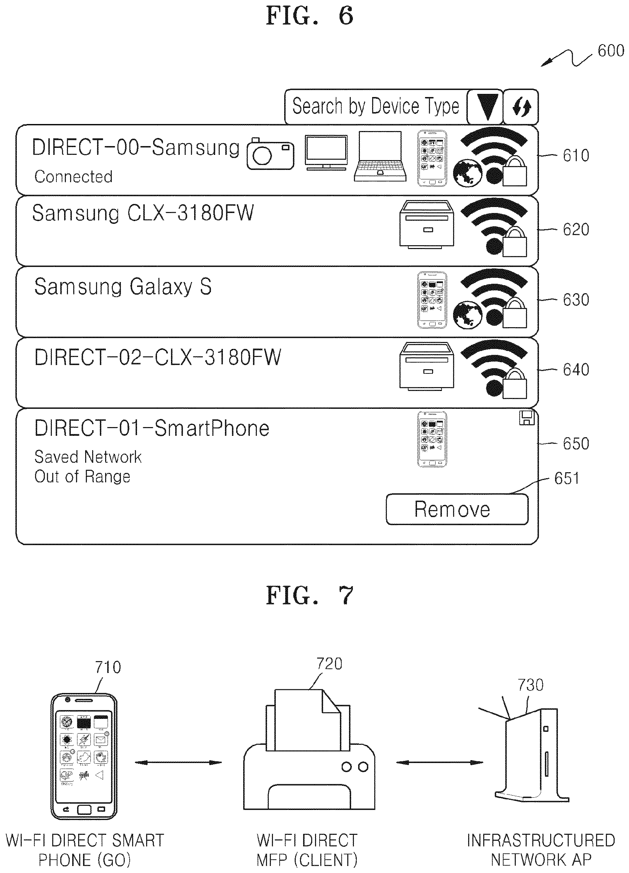

The WI-FI DIRECT devices have a profile storage function that is for storing information of the WI-FI DIRECT devices connected once thereto. FIG. 6 is a diagram showing a list of the WI-FI DIRECT devices, information of which is stored according to the profile storage function. The list of FIG. 6 is a screen displayed on the display unit of the WI-FI DIRECT MFP. Information of a first list 610 denotes a WI-FI DIRECT device currently connected to the WI-FI DIRECT MFP, information of second through fourth lists 620-640 denotes WI-FI DIRECT devices that are not currently connected to the WI-FI DIRECT MFP, but are included in a device discovery range of the WI-FI DIRECT MFP, and information of a fifth list 650 denotes a WI-FI DIRECT device that has been connected at least once to the WI-FI DIRECT device although that is not discovered currently. If the information of the fifth list 650 is not necessary, the user may delete the fifth list 650 by pushing a remove button 651. Since the WI-FI DIRECT device has the profile storage function as described above, the WI-FI DIRECT device stores information of the other WI-FI DIRECT devices connected at least once thereto, and then, may be connected fast without executing the WPS by using the stored information in a case where the same device tries to connect thereto again.

The WI-FI DIRECT device may be P2P connected to another WI-FI DIRECT device, and at the same time, may be connected to the infrastructured network, which is referred to as a concurrent connection. FIG. 7 is a diagram showing the WI-FI Direct devices that are in the concurrent connection states. Referring to FIG. 7, the WI-FI DIRECT MFP 720 is P2P connected to a smartphone 710 that is another WI-FI DIRECT device, and at the same time, the WI-FI DIRECT MFP 720 is also connected to an AP 730 of the infrastructured network. The WI-FI Direct MFP 720 may directly transmit/receive print data to/from the smartphone 710, and at the same time, may directly transmit/receive print data to/from the infrastructured network through the AP 730 of the infrastructured network.

When the WI-FI DIRECT device is concurrently connected to the WI-FI DIRECT device and the infrastructured network as shown in FIG. 7, or when the WI-FI DIRECT device is wired connected to the infrastructured network and P2P connected to another WI-FI DIRECT device, different IP addresses and MAC addresses with respect to the connections, that is, the connection to the infrastructured network and the connection to the another WI-FI DIRECT device, may be used. Through a multi-homing technology, the WI-FI DIRECT device may provide the devices with different services from each other. For example, the WI-FI DIRECT MFP may provide services of all functions of the MFP through an interface connected to the infrastructured network. However, the WI-FI DIRECT MFP may provide services of partial functions of the MFP through an interface connected to another WI-FI DIRECT device.

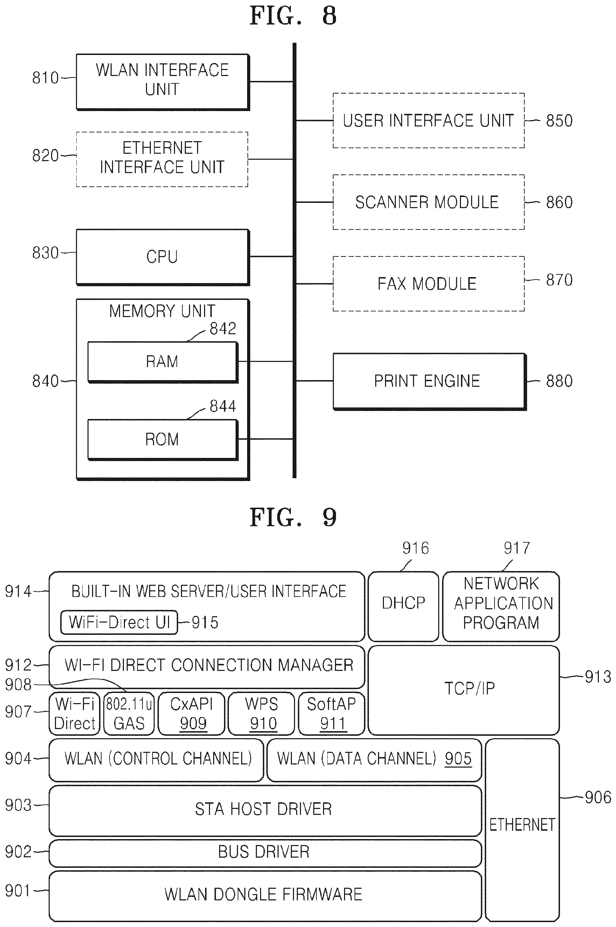

FIG. 8 is a block diagram showing a hardware configuration of the WI-FI DIRECT MFP. Referring to FIG. 8, the WI-FI DIRECT MFP may include a WLAN interface module 810, an Ethernet interface module 820, a central processing unit (CPU) 830, a memory unit 840, a user interface module 850, a scanner module 860, a fax module 870, and a print engine 880. In addition, the memory unit 840 may include a random access memory (RAM) 842 and a read only memory (ROM) 844. If the MFP only supports the WLAN, the MFP may not include the Ethernet interface module 820. In addition, if the device is a printer, rather than the MFP, the scanner module 860 and the fax module 870 are not necessary.

The WLAN interface module 810 is hardware performing IEEE 802.11 b/g/n function, and may communicate with a main board, on which the CPU 830 is mounted, of the MFP via a universal serial bus (USB). The Ethernet interface module 820 is hardware for performing wired Ethernet communication according to IEEE 802.3. The CPU 830 controls overall operations of the MFP, and the memory unit 840 stores information for controlling the MFP and the print data to be read when it is necessary. The user interface module 850 functions as a medium for the user to identify information of the MFP and to input commands into the MFP. The user interface module 850 may be variously modified according to products, for example, may be configured as two or four lines displayed on a display unit such as an LCD or a light emitting diode (LED), or may be realized as a graphic user interface (UI) so as to represent various graphics. The scanner module 860, the fax module 870, and the print engine 880 are hardware for performing functions of a scanner, a facsimile, and a printer.

FIG. 9 is a block diagram showing software configuration of the WI-FI DIRECT MFP. The configuration of the software in the WI-FI DIRECT MFP will be described with reference to FIG. 9 as follows.

A WLAN dongle firmware 901 is a firmware for connecting the WLAN, and may be stored in WLAN dongle hardware or may be transmitted to the WLAN dongle hardware from a main board of the MFP when booting the MFP. A bus driver 902 and a STA (station) host driver 903 are low level bus drivers for communicating with the WLAN hardware. A WLAN controlling channel 904 and a WLAN data channel 905 are channels for communicating with the WLAN firmware. A WI-FI DIRECT module 907 performs the WI-FI DIRECT connection and transmits an operating command to the WLAN firmware. An IEEE 802.11u generic advertisement service (GAS) module 908 performs functions according to IEEE 802.11u GAS, and a WPS module 910 performs a WPS function. A soft AP module 911 is a software module allowing the MFP to perform as the AP. A transmission control protocol (TCP)/IP 913 is a standard protocol for network transmission. A WI-FI DIRECT connection manager 912 is a module for controlling the WI-FI DIRECT connection. A WI-FI DIRECT user interface 915 allows the user to perform settings related to the WI-FI DIRECT, and may be included in a user interface 914 that is installed in an embedded web server (EWS). A DHCP server 916 automatically allocates an IP to the WI-FI DIRECT device that is connected as a client. A network application program 917 performs various application operations relating to the network.

The above-described WI-FI DIRECT technology has the following advantages.

The WI-FI DIRECT device may be connected to other devices whenever and wherever, and thus, has increased mobility and portability. If a new WI-FI DIRECT device is added, the WI-FI DIRECT device may be directly connected to the new WI-FI DIRECT device. In addition, it may be identified whether there is an available device or service before setting the connection to other devices, and thus, the WI-FI DIRECT devices may be conveniently used. In addition, the connection may be performed simply and stably by a simple operation, for example, pushing a WPS button, and the connection may be performed with high security functions by using the WPA2 technology.

In addition, the WI-FI DIRECT technology may provide various functions that may not be provided by the conventional WLAN technology.

For example, the device discovery function for searching for peripheral WI-FI DIRECT devices by the device type unit, the service discovery function that may search for services provided by the peripheral WI-FI DIRECT devices. A power management function that may effectively use electric power and the concurrent connection function that may form the P2P connection between the WI-FI DIRECT devices while connecting to the conventional infrastructured network. A function of separating a security domain between the infrastructured network connection and the WI-FI DIRECT connection, and a cross connection function for sharing an Internet connection may be provided by the WI-FI DIRECT technology.

In addition, since the WI-FI DIRECT technology is based on the WLAN technology, that is, IEEE 802.11, the WI-FI DIRECT devices may be compatible with legacy WLAN devices.

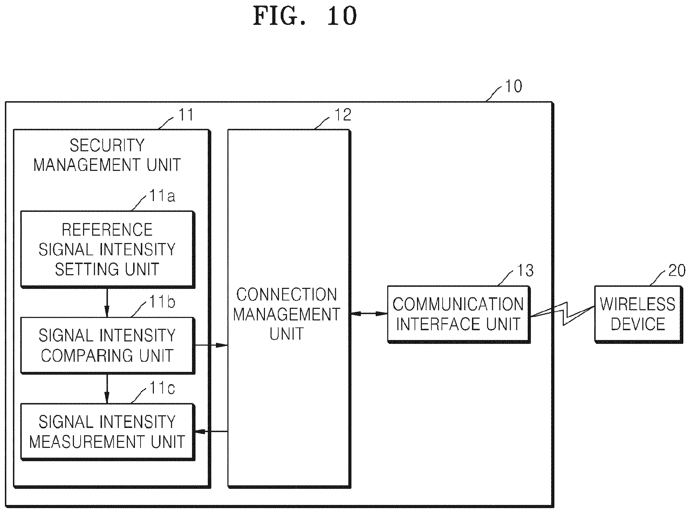

Hereinafter, a method of managing security based on signal intensity of the WI-FI DIRECT MFP according to the embodiment of the present invention will be described with reference to FIGS. 10 through 15.

FIG. 10 is a block diagram of a WI-FI DIRECT MFP 10 according to an embodiment. Featured components in executing the method of managing the security, of the WI-FI DIRECT MFP 10 are only shown in FIG. 10 under the assumption that the basic hardware configuration of the WI-FI DIRECT MFP shown in FIG. 8 is included in the WI-FI DIRECT MFP 10. For example, a security management unit 11 and a connection management unit 12 of FIG. 10 are included in the CPU 830 of FIG. 8, and a communication interface unit 13 of FIG. 10 corresponds to the WLAN interface unit 810 of FIG. 8. Basic components of the MFP such as the print engine 880, the fax module 870, and the scanner module 860 shown in FIG. 8 are not shown in FIG. 10.

Referring to FIG. 10, the WI-FI DIRECT MFP 10 of the present embodiment may include the security management unit 11, a connection management unit 12, and the communication interface unit 13. The security management unit 11 may include a reference signal intensity setting unit 11a, a signal intensity comparing unit 11b, and a signal intensity measurement unit 11c. Functions and operations of each component in the MFP 10 will be described with reference to following flowcharts.

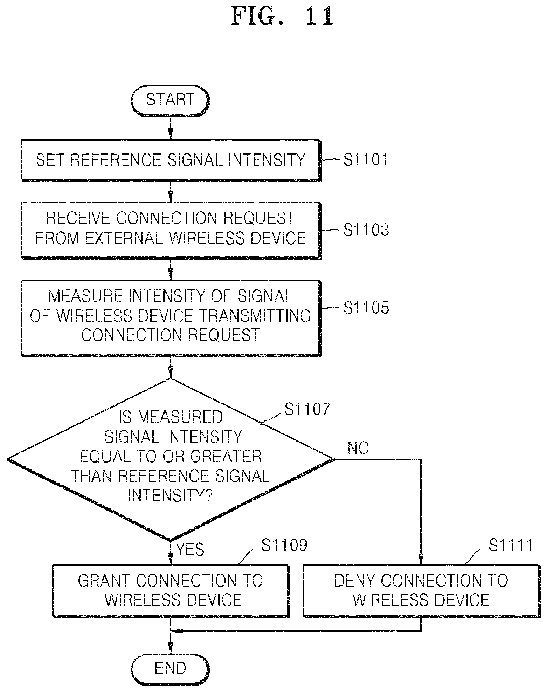

FIGS. 11 through 13 are flowcharts illustrating a method of managing security based on a signal intensity of the WI-FI DIRECT MFP 10 according to an embodiment of the present invention.

FIG. 11 is a flowchart illustrating processes of measuring the signal intensity of a wireless device 20 and determining whether the connection is permitted or not, when the wireless device 20 requests to connect to the MFP 10 in the WI-FI DIRECT.

Referring to FIG. 11, the reference signal intensity setting unit 11a of the MFP 10 may set an intensity of a reference signal for controlling accesses of wireless devices (S1101). Here, the reference signal intensity may be set as a value inputted by the user through a user interface unit (not shown) that is connected to the reference signal intensity setting unit 11a, or may be an arbitrary value determined by the reference signal intensity setting unit 11a in consideration of current communication environment. When the communication interface unit 13 receives a WI-FI DIRECT connection request from the external wireless device 20 (S1103), the signal intensity measuring unit 11c measures intensity of a signal transmitted from the wireless device 20 (S1105). Since the connection request signal is transmitted from the wireless device 20, the connection request signal intensity may be measured. When the signal intensity is measured, the signal intensity comparing unit 11b compares the measured signal intensity with the reference signal intensity set by the reference signal intensity setting unit 11a (S1107). As a result of the comparison, when the measured signal intensity is equal to or greater than the reference signal intensity, the WI-FI DIRECT connection between the wireless device 20 and the MFP 10 is permitted (S1109). Therefore, the WPS may be executed in order to securely connect the MFP 10 and the wireless device 20 to each other. On the other hand, if the measured signal intensity is less than the reference signal intensity, the connection of the wireless device 20 to the MFP 10 is denied (S1111). As described above, the connection to the wireless device, the connection request signal intensity of which is less than a predetermined value, is restricted, and thus, undesired connection of a wireless device may be prevented when a wireless network is formed by operating the WI-FI DIRECT MFP as the GO in houses or offices. In general, houses and offices are blocked by walls, and thus, the signal intensity transmitted from other wireless devices out of the houses or the offices is greatly reduced.

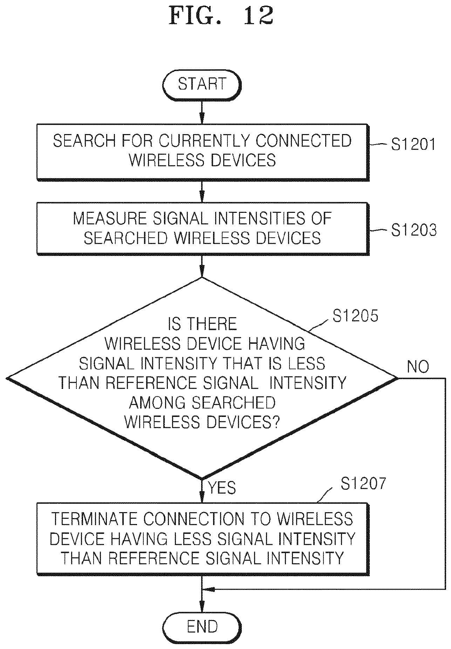

Meanwhile, processes of measuring signal intensities of the wireless devices that are currently connected to the MFP 10 in the WI-FI DIRECT and terminating the connection of the wireless devices if the measured signal intensities of which are less than a reference signal intensity, will be described with reference to FIG. 12.

Referring to FIG. 12, the connection management unit 12 of the MFP 10 searches for the wireless devices that are currently WI-FI DIRECT connected to the MFP 10 (S1201). When the MFP 10 operates as a GO, a plurality of wireless devices may be WI-FI DIRECT connected to the MFP 10. When the wireless devices that are connected to the MFP 10 are searched, the signal intensity measurement unit 11c measures the signal intensities of the searched wireless devices (S1203). The intensity of the signal that is transmitted from the wireless device may be measured while maintaining the WI-FI DIRECT connection between the MFP 10 and the wireless device. The signal intensity comparing unit 11b compares the signal intensity of the searched wireless devices with the reference signal intensity set in advance by the signal intensity setting unit 11a, and transmits a comparison result to the connection management unit 12. The connection management unit 12 terminates the connection to the wireless device having the signal intensity that is less than the reference signal intensity (S1207). As described above, the processes of measuring the signal intensities of the wireless devices that are currently connected to the MFP 10 and terminating the connection if the signal intensities are less than the reference signal intensity may be repeatedly performed with predetermined time intervals. Therefore, if the wireless device that is not wanted becomes connected to the MFP 10, such undesired connection may be disconnected by the repetitive monitoring.

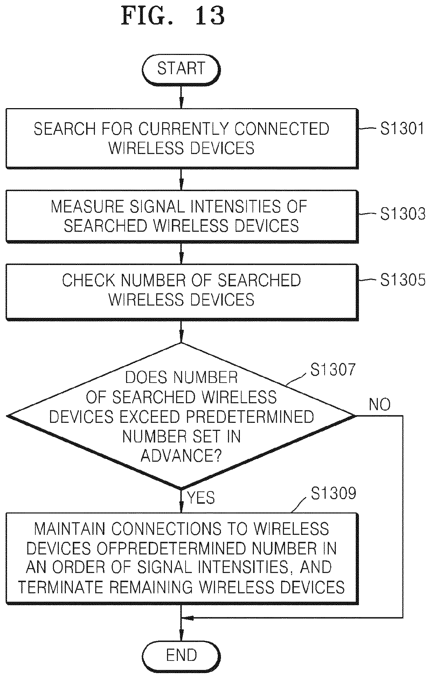

Otherwise, connections to a predetermined number of wireless devices among the wireless devices that are currently connected to the MFP 10 are only maintained, and the connection to the other wireless devices may be terminated. Only a certain number of wireless devices from the available wireless devices will have its connections with the MFP 10 maintained. This process will be described with reference to FIG. 13.

Referring to FIG. 13, the connection management unit 12 searches for the wireless devices that are currently WI-FI DIRECT connected to the MFP 10 (S1301), and the signal intensity measurement unit 11c measures the signal intensities of the searched wireless devices (S1303). In addition, the connection management unit 12 checks the number of the searched wireless devices (S1305), and determines whether the number of searched wireless devices exceeds the number that is predetermined (S1307). If the number of searched wireless devices exceeds the predetermined number, the process goes to operation S1309 so that the connection management unit 12 maintains the connection to the wireless devices of a predetermined numbers in an order of the signal intensity, and terminates the connection to the other wireless devices. The user may set the number of wireless devices that may be connected to the MFP 10 in advance, and terminates the connection to the wireless devices having weak signal intensities when the number of wireless devices connected to the MFP exceeds the set number. Thus, the wireless devices wanted by the user may be only connected to the MFP.

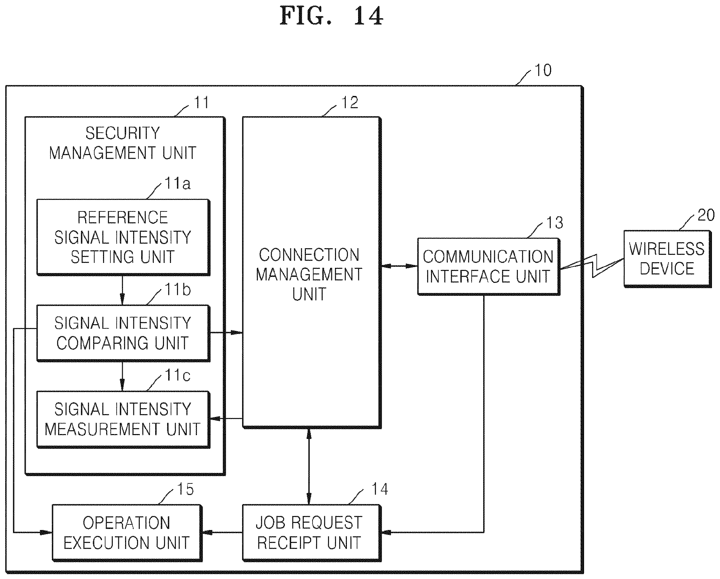

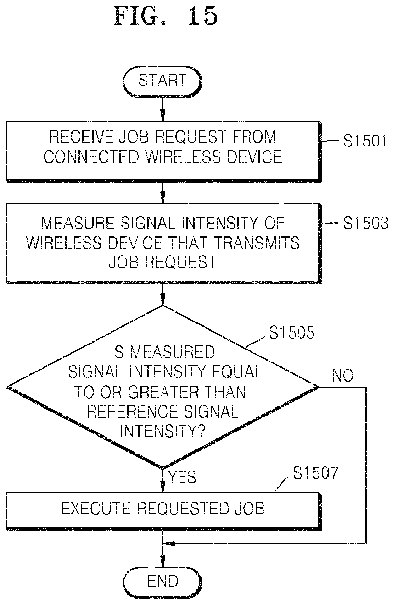

FIG. 14 is a block diagram of a WI-FI DIRECT MFP according to another embodiment of the present invention. Referring to FIG. 14, the MFP 10 additionally includes an operation request receipt unit 14 and an operation execution unit 15, in addition to the configuration of MFP 10 shown in FIG. 10. Functions and operations of each component will be described with reference to FIG. 15.

FIG. 15 is a flowchart illustrating a method of executing a requested job according to a signal intensity of a wireless device, if an operation request is transmitted from the wireless device. Referring to FIG. 15, the operation request receipt unit 14 receives a job request from a wireless device 20 connected to the MFP 10 through the communication interface unit 13 (S1501). The signal intensity measurement unit 11c measures the signal intensity of the wireless device 20 that transmits the job request (S1503). Then, the signal intensity comparing unit 11b compares the measured signal intensity with the reference signal intensity set by the reference signal intensity setting unit 11a (S1505), and the operation execution unit 15 executes the requested job when the measured signal intensity is equal to or greater than the reference signal intensity (S1507). As described above, when the job request is transmitted from the wireless device 20, the signal intensity of the wireless device is measured to determine whether the requested job will be executed or not, and thus, the job requested by undesired wireless connection may not be executed even if the wireless device is connected to the MFP 10.

According to the above description, the connection to the wireless device having the signal intensity that is less than a predetermined reference is restricted or a job requested by the wireless device is not executed, and thus, the undesired connection of the wireless device to the MFP or the execution of the job requested by the wireless device may be prevented in houses or offices.

While the present invention has been particularly shown and described with reference to exemplary embodiments thereof, it will be understood by those of ordinary skill in the art that various changes in form and details may be made therein without departing from the spirit and scope of the present invention as defined by the following claims.

Although a few embodiments have been shown and described, it would be appreciated by those skilled in the art that changes may be made in these embodiments without departing from the invention, the scope of which is defined in the following claims.

## Claims

1. An image forming apparatus (10) supporting a peer-to-peer, P2P, connection, the image forming apparatus (10) comprising:
a communication interface unit (13) connectable to an external wireless device (20) in the P2P connection;
a connection management unit (12) configured to manage a connection to the external wireless device (20); and
a security management unit (11) configured to measure an intensity of a signal transmitted from the external wireless device (20), and to control an access of the wireless device (20) for connection to the image forming apparatus (10) based on the measured signal intensity,
wherein the image forming apparatus (10) is configured to function as an access point, AP, that allows the external wireless device (20) in the P2P connection to be connected to the image forming apparatus (10).

2. The image forming apparatus of claim 1, wherein the security management unit comprises:
a signal intensity measurement unit (11c) configured to measure the intensity of the signal from the wireless device;
a reference signal intensity setting unit (11a) configured to set a reference signal intensity; and
a signal intensity comparing unit (11b) arranged to compare the signal intensity measured by the signal intensity measurement unit with the reference signal intensity.

3. The image forming apparatus of claim 1, wherein the connection management unit is configured to allow the connection to the wireless device if an intensity of a connection request signal transmitted from an external wireless device is equal to or greater than the reference signal intensity, and to deny the connection if the intensity of the connection request signal is less than the reference signal intensity, when the image forming apparatus operates as the AP.

4. The image forming apparatus of claims 1 or 3, wherein the connection management unit is configured to terminate connections to the wireless devices having signal intensities less than the reference signal intensity among wireless devices that are currently connected to the image forming apparatus, when the image forming apparatus operates as the AP.

5. The image forming apparatus of any one of claims 1, 3 or 4, wherein when the number of searched wireless devices exceeds a predetermined number that is set in advance and the image forming apparatus operates as the AP, the connection management unit terminates connections of the wireless devices after remaining the predetermined number of wireless devices in an order of the measured signal intensities.

6. The image forming apparatus of claim 1, further comprising:
a job request receipt unit receiving a job request from the wireless device; and
an operation execution unit performing the requested job,
wherein the security management unit comprises:
a signal intensity measurement unit for measuring the intensity of the signal from the wireless device that transmits the job request;
a reference signal intensity setting unit setting a reference signal intensity; and
a signal intensity comparing unit comparing the signal intensity measured by the signal intensity measurement unit with the reference signal intensity,
optionally wherein the job request receipt unit executes the requested job when the measured signal intensity is equal to or greater than the reference signal intensity.

7. A method of managing security of an image forming apparatus (10) that supports a peer-to-peer, P2P, connection based on a signal intensity, the method comprising:
measuring an intensity of a signal transmitted from an external wireless device (20) by the image forming apparatus (10); and
controlling an access of the wireless device (20) for connection to the image forming apparatus (10) by the image forming apparatus (10) based on the measured signal intensity,
wherein the image forming apparatus (10) functions as an access point, AP, that allows the external wireless device (20) in the P2P connection to be connected to the image forming apparatus (10).

8. The method of claim 7, wherein the measuring of the signal intensity comprises:
receiving a connection request from the external wireless device when the image forming apparatus operates as the AP; and
measuring the signal intensity of the connection request.

9. The method of claim 7 or 8, wherein the controlling of the access comprises:
comparing the measured signal intensity with a reference signal intensity that is set in advance; and
denying the access of the wireless device when the measured signal intensity is less than the reference signal intensity, and allowing the access of the wireless device when the measured signal intensity is equal to or greater than the reference signal intensity.

10. The method of any one of claims 7 to 9, wherein the measuring of the signal intensity comprises:
searching for wireless devices that are currently connected to the image forming apparatus when the image forming apparatus operates as the AP; and
measuring intensities of signals transmitted from the searched wireless devices.

11. The method of any one of claims 7 to 10, wherein the controlling of the access comprises:
comparing the measured signal intensity with a reference signal intensity that is set in advance, and terminating the connection to the wireless device having the signal intensity that is less than the reference signal intensity; and/or
checking the number of searched wireless devices, and when the number of searched wireless devices exceeds a predetermined number that is set in advance, terminating connections of the wireless devices after reorganizing the predetermined number of wireless devices in an order of the measured signal intensities.

12. The method of any of the preceding claims, wherein the measuring of the signal intensity comprises:
receiving a job request from the wireless device that is currently connected to the image forming apparatus; and
measuring an intensity of a signal transmitted from the wireless device that transmits the job request.

13. A non-transitory computer readable recording medium having embodied thereon a computer program for executing the method according to any of claims 7 through 12.

## Patentansprüche

1. Bilderzeugungsvorrichtung (10), die eine Peer-to-Peer-(P2P)-Verbindung unterstützt, die Bilderzeugungsvorrichtung (10) Folgendes umfassend:
eine Schnittstelleneinheit zur Kommunikation (13), die mit einer externen drahtlosen Vorrichtung (20) in der P2P-Verbindung verbindbar ist;
eine Verbindungsverwaltungseinheit (12), die konfiguriert ist, um eine Verbindung zu der externen drahtlosen Vorrichtung (20) zu verwalten; und
eine Sicherheitsverwaltungseinheit (11), die konfiguriert ist, um eine Intensität eines Signals zu messen, das von der externen drahtlosen Vorrichtung (20) übertragen wird, und einen Zugriff der drahtlosen Vorrichtung (20) zur Verbindung zu der Bilderzeugungsvorrichtung (10) basierend auf der gemessenen Signalintensität zu steuern,
wobei die Bilderzeugungsvorrichtung (10) konfiguriert ist, um als ein Zugriffspunkt (access point - AP) zu fungieren, der es der externen drahtlosen Vorrichtung (20) in der P2P-Verbindung ermöglicht, mit der Bilderzeugungsvorrichtung (10) verbunden zu werden.

2. Bilderzeugungsvorrichtung nach Anspruch 1, die Sicherheitsverwaltungseinheit Folgendes umfassend:
eine Einheit zum Messen der Signalintensität (11c), die konfiguriert ist, um die Intensität des Signals von der drahtlosen Vorrichtung zu messen;
eine Einheit zum Einstellen der Referenzsignalintensität (11a), die konfiguriert ist, um eine Referenzsignalintensität einzustellen; und
eine Einheit zum Vergleichen der Signalintensität (11b), die angeordnet ist, um die Signalintensität, die durch die Einheit zum Messen der Signalintensität gemessen wird, mit der Referenzsignalintensität zu vergleichen.

3. Bilderzeugungsvorrichtung nach Anspruch 1, wobei die Verbindungsverwaltungseinheit konfiguriert ist, um die Verbindung mit der drahtlosen Vorrichtung zu ermöglichen, falls eine Intensität eines Verbindungsanfragesignals, das von einer externen drahtlosen Vorrichtung übertragen wird, gleich der oder größer als die Referenzsignalintensität ist, und um die Verbindung abzulehnen, falls die Intensität des Verbindungsanfragesignals geringer als die Referenzsignalintensität ist, wenn die Bilderzeugungsvorrichtung als der AP funktioniert.

4. Bilderzeugungsvorrichtung nach den Ansprüchen 1 oder 3, wobei die Verbindungsverwaltungseinheit konfiguriert ist, um Verbindungen mit den drahtlosen Vorrichtungen, die Signalintensitäten aufweisen, die geringer als die Referenzsignalintensität sind, unter drahtlosen Vorrichtungen, die gegenwärtig mit der Bilderzeugungsvorrichtung verbunden sind, zu beenden wenn die Bilderzeugungsvorrichtung als der AP funktioniert.

5. Bilderzeugungsvorrichtung nach einem der Ansprüche 1, 3 oder 4, wobei, wenn die Anzahl von gesuchten drahtlosen Vorrichtungen eine vorbestimmte Anzahl übersteigt, die im Vorfeld festgelegt wird, und die Bilderzeugungsvorrichtung als der AP funktioniert, die Verbindungsverwaltungseinheit Verbindungen der drahtlosen Vorrichtungen beendet, nachdem die vorbestimmte Anzahl von drahtlosen Vorrichtungen in einer Reihenfolge der gemessenen Signalintensitäten behalten wurde.

6. Bilderzeugungsvorrichtung nach Anspruch 1, ferner Folgendes umfassend:
eine Empfangseinheit für Auftragsanfragen, die eine Auftragsanfrage von der drahtlosen Vorrichtung empfängt; und
eine Einheit zur Vorgangsausführung, die den angefragten Auftrag ausführt,
wobei die Sicherheitsverwaltungseinheit Folgendes umfasst:
eine Einheit zum Messen der Signalintensität zum Messen der Intensität des Signals von der drahtlosen Vorrichtung, die die Auftragsanfrage überträgt;
eine Einheit zum Einstellen der Referenzsignalintensität, die eine Referenzsignalintensität einstellt; und
eine Einheit zum Vergleichen der Signalintensität, die die Signalintensität, die durch die Einheit zum Messen der Signalintensität gemessen wird, mit der Referenzsignalintensität vergleicht,
wobei optional die Empfangseinheit für Auftragsanfragen den angefragten Auftrag ausführt, wenn die gemessene Signalintensität gleich der oder größer als die Referenzsignalintensität ist.

7. Verfahren zum Verwalten der Sicherheit einer Bilderzeugungsvorrichtung (10), die eine Peer-to-Peer-(P2P)-Verbindung unterstützt, basierend auf einer Signalintensität, das Verfahren Folgendes umfassend:
Messen einer Intensität eines Signals, das von einer externen drahtlosen Vorrichtung (20) übertragen wird, durch die Bilderzeugungsvorrichtung (10); und
Regelung eines Zugriffs der drahtlosen Vorrichtung (20) zur Verbindung mit der Bilderzeugungsvorrichtung (10) durch die Bilderzeugungsvorrichtung (10) basierend auf der gemessenen Signalintensität,
wobei die Bilderzeugungsvorrichtung (10) als ein Zugriffspunkt (access point - AP) fungiert, der es der externen drahtlosen Vorrichtung (20) in der P2P-Verbindung ermöglicht, mit der Bilderzeugungsvorrichtung (10) verbunden zu werden.

8. Verfahren nach Anspruch 7, das Messen der Signalintensität Folgendes umfassend: Empfangen einer Verbindungsanfrage von der externen drahtlosen Vorrichtung, wenn die Bilderzeugungsvorrichtung als der AP funktioniert; und
Messen der Signalintensität der Verbindungsanfrage.

9. Verfahren nach Anspruch 7 oder 8, die Regelung des Zugriffs Folgendes umfassend:
Vergleichen der gemessenen Signalintensität mit einer Referenzsignalintensität, die im Vorfeld eingestellt wird; und
Ablehnen des Zugriffs der drahtlosen Vorrichtung, wenn die gemessene Signalintensität geringer als die Referenzsignalintensität ist, und Ermöglichen des Zugriffs der drahtlosen Vorrichtung, wenn die gemessene Signalintensität gleich der oder größer als die Referenzsignalintensität ist.

10. Verfahren nach einem der Ansprüche 7 bis 9, das Messen der Signalintensität Folgendes umfassend:
Suchen nach drahtlosen Vorrichtungen, die gegenwärtig mit der Bilderzeugungsvorrichtung verbunden sind, wenn die Bilderzeugungsvorrichtung als der AP funktioniert; und
Messen von Intensitäten von Signalen, die von den gesuchten drahtlosen Vorrichtungen übertragen werden.

11. Verfahren nach einem der Ansprüche 7 bis 10, die Regelung des Zugriffs Folgendes umfassend:
Vergleichen der gemessenen Signalintensität mit einer Referenzsignalintensität, die im Vorfeld eingestellt wird, und Beenden der Verbindung mit der drahtlosen Vorrichtung, die eine Signalintensität aufweist, die geringer als die Referenzsignalintensität ist; und/oder
Überprüfen der Anzahl gesuchter drahtloser Vorrichtungen, und wenn die Anzahl gesuchter drahtloser Vorrichtungen eine vorbestimmte Anzahl überschreitet, die im Vorfeld festgelegt wird, Beenden von Verbindungen der drahtlosen Vorrichtungen, nachdem die vorbestimmte Anzahl drahtloser Vorrichtungen in einer Reihenfolge der gemessenen Signalintensitäten neu organisiert wurde.

12. Verfahren nach einem der vorhergehenden Ansprüche, das Messen der Signalintensität Folgendes umfassend:
Empfangen einer Auftragsanfrage von der drahtlosen Vorrichtung, die gegenwärtig mit der Bilderzeugungsvorrichtung verbunden ist; und
Messen einer Intensität eines Signals, das von der drahtlosen Vorrichtung übertragen wird, die die Auftragsanfrage überträgt.

13. Nichtflüchtiges computerlesbares Aufzeichnungsmedium, das ein darauf verankertes Computerprogramm zum Ausführen des Verfahrens nach einem der Ansprüche 7 bis 12 aufweist.

## Revendications

1. Appareil de formation d'image (10) prenant en charge une connexion poste à poste, P2P, l'appareil de formation d'image (10) comprenant :
une unité d'interface de communication (13) pouvant être connectée à un dispositif sans fil externe (20) dans la connexion P2P ;
une unité de gestion de connexion (12) configurée pour gérer une connexion au dispositif sans fil externe (20) ; et
une unité de gestion de sécurité (11) configurée pour mesurer une intensité d'un signal transmis depuis le dispositif sans fil externe (20), et pour commander un accès du dispositif sans fil (20) pour une connexion à l'appareil de formation d'image (10) sur la base de l'intensité de signal mesurée,
dans lequel l'appareil de formation d'images (10) est configuré pour fonctionner en tant que point d'accès, AP, qui permet au dispositif sans fil externe (20) dans la connexion P2P d'être connecté à l'appareil de formation d'image (10).

2. Appareil de formation d'image selon la revendication 1, dans lequel l'unité de gestion de sécurité comprend :
une unité de mesure d'intensité de signal (11c) configurée pour mesurer l'intensité du signal provenant du dispositif sans fil ;
une unité de réglage d'intensité de signal de référence (11a) configurée pour régler une intensité de signal de référence ; et
une unité de comparaison d'intensité de signal (11b) agencée pour comparer l'intensité de signal mesurée par l'unité de mesure d'intensité de signal à l'intensité de signal de référence.

3. Appareil de formation d'image selon la revendication 1, dans lequel l'unité de gestion de connexion est configurée pour permettre la connexion au dispositif sans fil si une intensité d'un signal de demande de connexion transmis depuis un dispositif sans fil externe est supérieure ou égale à l'intensité du signal de référence, et pour refuser la connexion si l'intensité du signal de demande de connexion est inférieure à l'intensité de signal de référence, lorsque l'appareil de formation d'image fonctionne en tant qu'AP.

4. Appareil de formation d'image selon la revendication 1 ou 3, dans lequel l'unité de gestion de connexion est configurée pour arrêter des connexions au dispositif sans fil ayant des intensités de signal inférieures à l'intensité de signal de référence parmi des dispositifs sans fil qui sont actuellement connectés à l'appareil de formation d'image, lorsque l'appareil de formation d'image fonctionne en tant qu'AP.

5. Appareil de formation d'image selon l'une quelconque des revendications 1, 3 ou 4, dans lequel le nombre de dispositifs sans fil recherchés dépasse un nombre prédéterminé qui est réglé à l'avance et l'appareil de formation d'image fonctionne en tant qu'AP, l'unité de gestion de connexion interrompt les connexions des dispositifs sans fil après avoir laissé le nombre prédéterminé de dispositifs sans fil dans un ordre des intensités de signal mesurées.

6. Appareil de formation d'image selon la revendication 1, comprenant en outre :
une unité de réception de demande de travail recevant une demande de travail du dispositif sans fil ; et
une unité d'exécution d'opération effectuant le travail demandé,
dans lequel l'unité de gestion de sécurité comprend :
une unité de mesure d'intensité de signal pour mesurer l'intensité du signal provenant du dispositif sans fil qui transmet la demande de travail ;
une unité de réglage d'intensité de signal de référence réglant une intensité de signal de référence ; et
une unité de comparaison d'intensité de signal comparant l'intensité de signal mesurée par l'unité de mesure d'intensité de signal à l'intensité de signal de référence,
éventuellement dans lequel l'unité de réception de demande de travail exécute le travail demandé lorsque l'intensité de signal mesurée est supérieure ou égale à l'intensité de signal de référence.

7. Procédé de gestion de la sécurité d'un appareil de formation d'image (10) qui prend en charge une connexion poste à poste, P2P, sur la base d'une intensité de signal, le procédé comprenant :
la mesure d'une intensité d'un signal transmis depuis un dispositif sans fil externe (20) par l'appareil de formation d'image (10) ; et
la commande d'un accès du dispositif sans fil (20) pour une connexion à l'appareil de formation d'image (10) par l'appareil de formation d'image (10) sur la base de l'intensité de signal mesuré,
dans lequel l'appareil de formation d'image (10) fonctionne en tant que point d'accès, AP, qui permet au dispositif sans fil externe (20) dans la connexion P2P d'être connecté à l'appareil de formation d'image (10).

8. Procédé selon la revendication 7, dans lequel la mesure de l'intensité de signal comprend :
la réception d'une demande de connexion provenant du dispositif sans fil externe lorsque l'appareil de formation d'image fonctionne en tant qu'AP ; et
la mesure de l'intensité de signal de la demande de connexion.

9. Procédé selon la revendication 7 ou 8, dans lequel la commande de l'accès comprend :
la comparaison de l'intensité de signal mesurée à une intensité de signal de référence qui est réglée à l'avance ; et
le refus de l'accès du dispositif sans fil lorsque l'intensité de signal mesurée est inférieure à l'intensité de signal de référence, et le fait d'autoriser l'accès du dispositif sans fil lorsque l'intensité de signal mesurée est supérieure ou égale à l'intensité de signal de référence.

10. Procédé selon l'une quelconque des revendications 7 à 9, dans lequel la mesure de l'intensité de signal comprend :
la recherche de dispositifs sans fil qui sont actuellement connectés à l'appareil de formation d'image lorsque l'appareil de formation d'image fonctionne en tant qu'AP ; et
la mesure d'intensités de signaux transmis depuis les dispositifs sans fil recherchés.

11. Procédé selon l'une quelconque des revendications 7 à 10, dans lequel la commande de l'accès comprend :
la comparaison de l'intensité de signal mesurée à une intensité de signal de référence qui est réglée à l'avance, et l'arrêt de la connexion au dispositif sans fil ayant l'intensité de signal qui est inférieure à l'intensité de signal de référence ; et/ou
la vérification du nombre de dispositifs sans fil recherchés, et lorsque le nombre de dispositifs sans fil recherchés dépasse un nombre prédéterminé qui est réglé à l'avance, l'arrêt de connexions des dispositifs sans fil après la réorganisation du nombre prédéterminé de dispositifs sans fil dans un ordre des intensités de signal mesurées.

12. Procédé selon l'une quelconque des revendications précédentes, dans lequel la mesure de l'intensité de signal comprend :
la réception d'une demande de travail provenant du dispositif sans fil qui est actuellement connecté à l'appareil de formation d'image ; et
la mesure d'une intensité d'un signal transmis depuis le dispositif sans fil qui transmet la demande de travail.

13. Support d'enregistrement lisible par ordinateur non transitoire auquel est intégré un programme informatique permettant d'exécuter le procédé selon l'une quelconque des revendications 7 à 12.
